(19) Europäisches Patentamt
European Patent Office
Office européen des brevets

(11) **EP 4 712 592 A1**

(12) **EUROPEAN PATENT APPLICATION**
published in accordance with Art. 153(4) EPC

(43) Date of publication:
**18.03.2026 Bulletin 2026/12**

(21) Application number: **23936033.2**

(22) Date of filing: **09.05.2023**

(51) International Patent Classification (IPC):
**H04W 52/14** (2009.01)

(52) Cooperative Patent Classification (CPC):
**H04W 52/14**

(86) International application number:
**PCT/CN2023/093075**

(87) International publication number:
**WO 2024/229706 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **CHI, Liangang**
**Beijing 100085 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **PATHLOSS DETERMINATION METHOD AND APPARATUS**

(57) Provided in the present disclosure are a pathloss determination method and apparatus, relating to the technical field of communications. The method comprises: a terminal device receiving first information sent by a network device; according to the first information, determining a pathloss reference signal; and calculating, on the basis of the pathloss reference signal, an uplink pathloss. The present disclosure provides a technical scheme for determining the uplink pathloss of the terminal device. By means of applying the technical scheme of the present embodiment, the pathloss can be calculated for a target TRP, thereby achieving uplink power control.

| network device | | UE |
| --- | --- | --- |

step 201: the network device sends first information to the UE

step 202: the UE determines a PL RS based on the first information

step 203: the UE calculates an uplink pathloss based on the PL RS

FIG. 2

Processed by Luminess, 75001 PARIS (FR)

**Description**

**TECHNICAL FIELD**

The present disclosure relates to a field of communication technologies, and particularly to a method and an apparatus for determining a pathloss.

**BACKGROUND**

In a multi transmission reception point (M-TRP) scenario, pathlosses from a terminal to different transmission reception points (TRPs) are usually different. In a case that TRP switching occurs, a corresponding uplink pathloss needs to be determined to achieve uplink power control. However, there is currently a lack of technical solutions for determining an uplink pathloss of the terminal.

**SUMMARY**

The present disclosure proposes a method and an apparatus for determining a pathloss, and provides a technical solution for determining an uplink pathloss of a terminal.

A first aspect of embodiments of the present disclosure provides a method for determining a pathloss, performed by a user equipment (UE). The method includes: receiving first information sent by a network device; determining a pathloss reference signal (PL RS) based on the first information; and calculating an uplink pathloss based on the PL RS.

In some embodiments of the present disclosure, the first information includes at least one of: downlink control information (DCI); or a media access control control element (MAC CE).

In some embodiments of the present disclosure, the DCI includes a sounding reference signal (SRS) resource indicator (SRI); in which determining the PL RS based on the first information includes: determining a first SRS resource set included in the SRI; and determining a PL RS associated with the first SRS resource set from a first correlation relationship between SRS resource sets and PL RSs.

In some embodiments of the present disclosure, the method further includes: receiving the first correlation relationship sent by the network device; or determining the first correlation relationship based on a protocol agreement.

In some embodiments of the present disclosure, the DCI includes transmission configuration indicator (TCI) state information; in which determining the PL RS based on the first information includes: determining a first TCI state included in the TCI state information; and determining a PL RS associated with the first TCI state from a second correlation relationship between TCI states and PL RSs.

In some embodiments of the present disclosure, the method further includes: receiving the second correlation relationship sent by the network device; or determining the second correlation relationship based on a protocol agreement.

In some embodiments of the present disclosure, determining the PL RS based on the first information includes: determining a first control resource set (CORESET) where the DCI is located; and determining a PL RS associated with the first CORESET from a third correlation relationship between CORESETs and PL RSs.

In some embodiments of the present disclosure, the method further includes: receiving the third correlation relationship sent by the network device; or determining the third correlation relationship based on a protocol agreement.

In some embodiments of the present disclosure, determining the PL RS based on the first information includes: in a case that the DCI includes a sounding reference signal (SRS) resource indicator (SRI), determining the PL RS based on the SRI and a first correlation relationship between SRS resource sets and PL RSs; in a case that the DCI does not include the SRI and the DCI includes transmission configuration indicator (TCI) state information, determining the PL RS based on the TCI state information and a second correlation relationship between TCI states and PL RSs; and in a case that the DCI does not include the SRI and the DCI does not include the TCI state information, determining the PL RS based on a first control resource set (CORESET) where the DCI is located and a third correlation relationship between CORESETs and PL RSs.

In some embodiments of the present disclosure, determining the PL RS based on the first information includes: determining the PL RS based on a separate field set in the DCI.

In some embodiments of the present disclosure, determining the PL RS based on the first information includes: determining the PL RS based on value information of a field in the DCI.

In some embodiments of the present disclosure, determining the PL RS based on the first information includes: determining the PL RS based on a separately configured MAC CE.

In some embodiments of the present disclosure, determining the PL RS based on the first information includes: determining the PL RS based on a reserved state of a field in the MAC CE.

In some embodiments of the present disclosure, calculating the uplink pathloss based on the PL RS includes: in a case that at least two PL RSs are determined based on the first information, using the at least two PL RSs respectively to calculate uplink pathlosses, and using one of following first processing rules to determine the uplink pathloss to be used:

selecting a minimum uplink pathloss from at least two calculated uplink pathlosses as the uplink pathloss to be used;
selecting a maximum uplink pathloss from at least two calculated uplink pathlosses as the uplink pathloss to be used;
or performing a weighted sum on at least two calculated uplink pathlosses to obtain a result, and using the result as the uplink pathloss to be used.

In some embodiments of the present disclosure, the method further includes: receiving a first processing rule sent by the network device; or determining a first processing rule based on a protocol agreement.

In some embodiments of the present disclosure, the method further includes: receiving a first weighting coefficient sent by the network device; or, determining a first weighting coefficient based on a protocol agreement, wherein the first weighting coefficient is used for performing the weighted sum on the at least two calculated uplink pathlosses.

In some embodiments of the present disclosure, calculating the uplink pathloss based on the PL RS includes: in a case that at least two PL RSs are determined based on the first information, determining a PL RS used correspondingly for each antenna port based on a fourth correlation relationship between PL RSs and antenna ports, for calculating the uplink pathloss.

In some embodiments of the present disclosure, the method further includes: receiving the fourth correlation relationship sent by the network device; or determining the fourth correlation relationship based on a protocol agreement.

In some embodiments of the present disclosure, in a case that a plurality of PL RSs are used correspondingly for a first antenna port of the UE, the plurality of PL RSs are used respectively to calculate uplink pathlosses, and one of following second processing rules is used to determine an uplink pathloss to be used for the first antenna port:

selecting a minimum uplink pathloss from a plurality of calculated uplink pathlosses as the uplink pathloss to be used for the first antenna port;
selecting a maximum uplink pathloss from a plurality of calculated uplink pathlosses as the uplink pathloss to be used for the first antenna port;
or performing a weighted sum on a plurality of calculated uplink pathlosses to obtain a result, and using the result as the uplink pathloss to be used for the first antenna port.

In some embodiments of the present disclosure, the method further includes: receiving a second processing rule sent by the network device; or determining a second processing rule based on a protocol agreement.

In some embodiments of the present disclosure, the method further includes: receiving a second weighting coefficient sent by the network device; or determining a second weighting coefficient based on a protocol agreement, wherein the second weighting coefficient is used for performing the weighted sum on the plurality of calculated uplink pathlosses.

A second aspect of embodiments of the present disclosure provides a method for determining a pathloss, performed by a network device. The method includes: sending first information to a user equipment (UE); in which the first information is used to determine a pathloss reference signal (PL RS) and the PL RS is used to calculate an uplink pathloss of the UE.

In some embodiments of the present disclosure, the first information includes at least one of:
downlink control information (DCI); or a media access control control element (MAC CE).

In some embodiments of the present disclosure, the DCI includes a sounding reference signal (SRS) resource indicator (SRI).

In some embodiments of the present disclosure, the method further includes: sending a first correlation relationship between SRS resource sets and PL RSs to the UE.

In some embodiments of the present disclosure, the DCI includes transmission configuration indicator (TCI) state information.

In some embodiments of the present disclosure, the method further includes: sending a second correlation relationship between TCI states and PL RSs to the UE.

In some embodiments of the present disclosure, the method further includes: sending a third correlation relationship between control resource sets (CORESETs) and PL RSs to the UE.

In some embodiments of the present disclosure, a separate field in the DCI is used to determine the PL RS.

In some embodiments of the present disclosure, value information of a field in the DCI is used to determine the PL RS.

In some embodiments of the present disclosure, a separately configured MAC CE is used to determine the PL RS.

In some embodiments of the present disclosure, a reserved state of a field in the MAC CE is used to determine the PL RS.

In some embodiments of the present disclosure, the method further includes: sending a first processing rule to the UE, in which the first processing rule is used to calculate uplink pathlosses using at least two PL RSs respectively and determine the uplink pathloss to be used from the uplink pathlosses, in a case that the UE determines the at least two PL RSs based on the first information.

In some embodiments of the present disclosure, the method further includes: sending a first weighting coefficient to the UE, in which the first weighting coefficient is used for performing a weighted sum on at least two uplink pathlosses.

In some embodiments of the present disclosure, the method further includes: sending a fourth correlation relationship between PL RSs and antenna ports to the UE.

In some embodiments of the present disclosure, the method further includes: sending a second processing rule to the UE, in which the second processing rule is used to calculate uplink pathlosses using a plurality of PL RSs respectively and determine an uplink pathloss to be used for a first antenna port from the uplink pathlosses, in a case that the plurality of PL RSs are used correspondingly for the first antenna port of the UE.

In some embodiments of the present disclosure, the method further includes: sending a second weighting coefficient to the UE, in which the second weighting coefficient is used for performing a weighted sum on a plurality of uplink pathlosses to obtain the uplink pathloss to be used for the first antenna port.

A third aspect of embodiments of the present disclosure provides an apparatus for determining a pathloss, applied to a user equipment (UE). The apparatus includes: a first communication module, configured to receive first information sent by a network device; and a determination module, configured to determine a pathloss reference signal (PL RS) based on the first information and calculate an uplink pathloss based on the PL RS.

A fourth aspect of embodiments of the present disclosure provides an apparatus for determining a pathloss, applied to a network device. The apparatus includes: a second communication module, configured to send first information to a user equipment (UE); in which the first information is used to determine a pathloss reference signal (PL RS) and the PL RS is used to calculate an uplink pathloss of the UE.

A fifth aspect of embodiments of the present disclosure provides a communication system, including a user equipment (UE) and a network device, in which the UE is configured to perform a method according to the first aspect; and the network device is configured to perform a method according to the second aspect.

A sixth aspect of embodiments of the present disclosure provides a communication device. The communication device includes: a transceiver, a memory, and a processor respectively connected to the transceiver and the memory, in which the processor is configured to control the transceiver to send and receive wireless signals and implement the method according to the first aspect or the second aspect by executing a computer executable instruction on the memory.

A seventh aspect of embodiments of the present disclosure provides a computer storage medium, in which a computer executable instruction is stored on the computer storage medium, and when the computer executable instruction is executed by a processor, a method according to the first aspect or the second aspect is implemented.

The embodiments of the present disclosure provide a method and an apparatus for determining a pathloss, and provide a technical solution for determining an uplink pathloss of a UE. Specifically, the UE may receive first information sent by a network device; then determine a pathloss reference signal (PL RS) based on the first information; and then calculate an uplink pathloss based on the PL RS. By applying the technical solution of the embodiments of the present disclosure, the pathloss may be calculated for a target TRP, thereby achieving uplink power control.

Additional aspects and advantages of the present disclosure will be given in part in the following description and in part will be obvious from the following description or learned through practice of the present disclosure.

BRIEF DESCRIPTION OF THE DRAWINGS

The above and/or additional aspects and advantages of the present disclosure will become apparent and easily understood from the following description of the embodiments in conjunction with the accompanying drawings, in which:

FIG. 1 is a diagram illustrating an architecture of a communication processing system provided in an embodiment of the present disclosure;

FIG. 2 is a timing diagram illustrating a method for determining a pathloss provided in an embodiment of the present disclosure;

FIG. 3 is a flowchart illustrating a method for determining a pathloss provided in an embodiment of the present disclosure;

FIG. 4 is a flowchart illustrating a method for determining a pathloss provided in an embodiment of the present disclosure;

FIG. 5 is a block diagram illustrating an apparatus for determining a pathloss provided in an embodiment of the present disclosure;

FIG. 6 is a block diagram illustrating an apparatus for determining a pathloss provided in an embodiment of the present disclosure;

FIG. 7 is a block diagram illustrating a communication apparatus provided in an embodiment of the present disclosure;

FIG. 8 is a block diagram of a chip provided in an embodiment of the present disclosure.

## DETAILED DESCRIPTION

The following describes the embodiments of the present disclosure in detail. Examples of the embodiments are shown in the attached drawings, in which the same or similar labels represent the same or similar elements from beginning to end. The embodiments described below with reference to the attached drawings are exemplary and intended to explain the present disclosure, and should not be construed as limitations of the present disclosure. It should be noted that the embodiments of the present disclosure and the features in the embodiments may be combined with each other without conflict.

The embodiments of the present disclosure provide a method for determining a pathloss. In some embodiments of the present disclosure, the term "method for determining a pathloss" may be replaced with the term "information processing method" or "communication method", the term "apparatus for determining a pathloss" may be replaced with the term "information processing apparatus" or "communication apparatus", and the term "system for determining a pathloss" may be replaced with the term "information processing system" or "communication system".

The embodiments of the present disclosure are not exhaustive, but are only illustrative of some embodiments, and are not intended to be a specific limitation on the protection scope of the present disclosure. In the absence of contradiction, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily exchanged. In addition, the optional implementation methods in a certain embodiment may be arbitrarily combined. In addition, the embodiments may be arbitrarily combined. For example, some or all of the steps of different embodiments may be arbitrarily combined, and a certain embodiment may be arbitrarily combined with the optional implementation methods of other embodiments.

In each embodiment of the present disclosure, unless otherwise specified or there is a logical conflict, the terms and/or descriptions between the embodiments are consistent and may be referenced to each other, and the technical features in different embodiments may be combined to form a new embodiment based on their internal logical relationships.

The terms used in the embodiment of the present disclosure are merely for the purpose of describing a particular embodiment and are not intended to limit the embodiment of the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, in a case that using articles such as "a", "an", "the" in English translation, the noun after the article may be understood as a singular expression or a plural expression.

In the embodiments of the present disclosure, "a plurality of" refers to two or more.

In some embodiments, the terms "at least one", "one or more", "a plurality of", "multiple", etc. may be used interchangeably.

In some embodiments, "at least one of A and B", "A and/or B", "A in one case, B in another case", "in response to one case, A; in response to another case, B", etc., may include the following technical solutions according to the situation: in some embodiments, A (A is executed independently of B); in some embodiments, B (B is executed independently of A); in some embodiments, execution is selected from A and B (A and B are selectively executed); in some embodiments, A and B (both A and B are executed). When there are more branches such as A, B, C, etc., the above is also applicable.

In some embodiments, the reciting way of "A or B" may include the following technical solutions according to the situation: in some embodiments, A (A is executed independently of B); in some embodiments, B (B is executed independently of A); in some embodiments, execution is selected from A and B (A and B are selectively executed). When there are more branches such as A, B, C, etc., the above is also applicable.

The prefixes such as "first" and "second" in the embodiments of the present disclosure are only used to distinguish different description objects, and do not constitute restrictions on the position, order, priority, quantity or content of the description objects. The statements of the description objects refer to the description in the claims or the context of embodiments, and should not constitute unnecessary restrictions due to the use of prefixes. For example, if the description object is a "field", the ordinal numbers before the "field" of the "first field" and the "second field" do not limit the position or order between the "fields", and the "first" and "second" do not limit whether the "fields" they modify are in the same message, nor do they limit the order of the "first field" and the "second field". For another example, if the description object is a "level", the ordinal numbers before the "level" in the "first level" and the "second level" do not limit the priority between the "levels". For another example, the number of description objects is not limited by the ordinal number, and may be one or more. Taking the "first apparatus" as an example, the number of "apparatuses" may be one or more. In addition, the objects modified by different prefixes may be the same or different. For example, if the description object is " apparatus", then the "first apparatus" and the "second apparatus" may be the same apparatus or different apparatuses, and their types may be the same or different. For another example, if the description object is "information", then the "first information" and the "second information" may be the same information or different information, and their contents may be the same or different.

In some embodiments, "including A", "comprising A", "containing A", "used to indicate A in", and "carrying A with" may be interpreted as directly carrying A or indirectly indicating A.

In some embodiments, terms such as "in response to ...", "in response to determining ...", "in a case of ...", "at the time of ...", "when ...", "if ..." etc. may be used interchangeably.

In some embodiments, terms such as "greater than", "greater than or equal to", "not less than", "more than", "more than or equal to", "not less than", "higher than", "higher than or equal to", "not lower than", and "above" may be replaced with each other, and terms such as "less than", "less than or equal to", "not greater than", "less than", "less than or equal to", "no more than", "lower than", "lower than or equal to", "not higher than", and "below" may be replaced with each other.

In some embodiments, apparatuses, etc. may be interpreted as physical or virtual, and their names are not limited to the names recorded in the embodiments. Terms such as "apparatus", "equipment", "device", "circuit", "network element", "node", "function", "unit", "section", "system", "network", "chip", "chip system", "entity", and "subject" may be used interchangeably.

In some embodiments, the terms "access network device (AN device)", "radio access network device (RAN device)", "base station (BS)", "radio base station", "fixed station", "node", "access point", "transmission point (TP)", "reception point (RP)", "transmission reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be used interchangeably.

In some embodiments, the terms "terminal", "terminal device", "user equipment (UE)", "user terminal" "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, an access network device, a core network device, or a network device may be replaced by a terminal. For example, a structure in which the communication between the access network device, the core network device, or the network device, and the terminal is replaced by the communication between a plurality of terminals (for example, it may also be referred to as device-to-device (D2D), vehicle-to-everything (V2X), etc.) may also be applied to each embodiment of the present disclosure. In this case, it may also be set as a structure in which the terminal has all or part of the functions of the access network device. In addition, the language such as "uplink" and "downlink" may also be replaced by the language corresponding to the communication between the terminals (for example, "side"). For example, the uplink channel, the downlink channel, etc. may be replaced by the side channel, and the uplink, the downlink, etc. may be replaced by the sidelink.

In some embodiments, the terminal may be replaced by the access network device, the core network device, or the network device. In this case, the access network device, the core network device, or the network device may also be configured to have a structure that has all or part of the functions of the terminal.

In some embodiments, the names of information, etc. are not limited to the names recited in the embodiments, and terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" may be used interchangeably.

In some embodiments, the terms "codebook", "codeword", "precoding matrix" and the like may be interchangeable. For example, a codebook may be a collection of one or more codewords/precoding matrices.

In some embodiments, terms such as "uplink", "physical uplink" may be interchangeable, terms such as "downlink", "physical downlink" may be interchangeable, and terms such as "side", "sidelink", "side communication", "sidelink communication", "direct connection", "direct link", "direct communication", "direct link communication" may be interchangeable.

In some embodiments, the terms "downlink control information (DCI)", "downlink (DL) assignment", "DL DCI", "uplink (UL) grant", "UL DCI" and the like may be used interchangeably.

In some embodiments, terms such as "physical downlink shared channel (PDSCH)", "DL data" and the like may be interchangeable, and terms such as "physical uplink shared channel (PUSCH)", "UL data" and the like may be interchangeable.

In some embodiments, the terms "radio", "wireless", "radio access network (RAN)", "access network (AN)", "RAN-based" and the like may be used interchangeably.

In some embodiments, the terms "search space", "search space set", "search space configuration", "search space set configuration", "control resource set (CORESET)", "CORESET configuration" and the like may be interchangeable.

In some embodiments, terms such as "synchronization signal (SS)", "synchronization signal block (SSB)", "reference signal (RS)", "pilot", and "pilot signal" may be used interchangeably.

In some embodiments, terms such as "moment", "time point", "time", and "time position" may be interchangeable, and terms such as "duration", "period", "time window", "window", and "time" may be interchangeable.

In some embodiments, the terms "component carrier (CC)", "cell", "frequency carrier", "carrier frequency" and the like may be used interchangeably.

In some embodiments, terms such as "resource block (RB)", "physical resource block (PRB)", "sub-carrier group (SCG)", "resource element group (REG)", "PRB pair", "RB pair", and "resource element (RE)" may be used interchangeably.

In some embodiments, terms such as wireless access scheme, waveform, etc. may be used interchangeably.

In some embodiments, the terms "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel" and the like may be used interchangeably.

In some embodiments, the terms "frame", "radio frame", "subframe", "slot", "sub-slot", "mini-slot", "symbol", "symbol", "transmission time interval (TTI)" and so on may be used interchangeably.

In some embodiments, "obtain", "get", "receive", "transmit", "bidirectional transmission", "send and/or receive" may be interchangeable, and may be interpreted as receiving from other entity, obtaining from a protocol, obtaining by self-processing, autonomous implementation, etc.

In some embodiments, terms such as "send", "launch", "report", "issue", "transmit", "bidirectional transmission", "send and/or receive" may be used interchangeably.

In some embodiments, "predetermined" or "preset" may be interpreted as being prespecified in a protocol, etc., or may be interpreted as a preset action applied to an apparatus, etc.

In some embodiments, determining may be interpreted as "judging", "deciding", "calculating", "computing", "processing", "deriving", "investigating", "searching", "looking up", "searching", "inquiry", "ascertaining", "receiving", "transmitting", "inputting", "outputting", "accessing", "resolving", "selecting", "choosing", "establishing", "comparing", "assuming", "expecting", "considering", "broadcasting", "notifying", "communicating", "forwarding", "configuring", "reconfiguring", "allocating", "mapping", "assigning", etc., but is not limited to the above.

In some embodiments, the determination or judgment may be performed by a value represented by 1 bit (0 or 1), by a true or false value (i.e., boolean value) represented by true or false, or by comparison of a numerical value (for example, comparison with a predetermined value), but is not limited to this.

In some embodiments, "network" may be interpreted as devices included in the network (e.g., an access network device, a core network device, etc.).

In some embodiments, "not expecting to receive" may be interpreted as not receiving on a time domain resource and/or a frequency domain resource, or as not performing subsequent processing on data after receiving the data; and "not expecting to send" may be interpreted as not sending, or as sending but not expecting the receiver to respond to the sent content.

In some embodiments, acquisition of data and information, etc. may comply with the laws and regulations of the country where the data is obtained.

In some embodiments, data and information, etc. may be obtained with the consent of a user.

In addition, each element, each row, or each column in a table of the embodiments of the present disclosure may be implemented as an independent embodiment, and the combination of any elements, any rows, and any columns may also be implemented as an independent embodiment.

With the continuous development of wireless communications, the requirements for communication capabilities are getting higher and higher. For future application scenarios such as augmented reality (AR)/virtual reality (VR), vehicle-to-everything, and Internet of things, ultrahigh-speed, ultra-low-latency, and ultra-large bandwidth communication has become the norm. In order to meet the requirements, more and more new technologies have been proposed. A multiple input multiple output (MIMO) technology has opened a new era in the development and utilization of a space resource in a mobile communication system.

Distributed MIMO is developed on the basis of traditional classical MIMO, which expands the application scope of the MIMO. Distributed MIMO shortens a distance between the TRP and the terminal, which may reduce the propagation loss of a wireless signal. Transmission signals of the distributed MIMO may reach the terminal from different TRPs, which may overcome the blocking effect during a propagation process. Therefore, the distributed MIMO will play an important role in a millimeter wave and a terahertz communication. For the terminal, a distributed MIMO technology means that there will be multiple TRPs (M-TRP) providing services at the same time. Through the joint transmission or dynamic switching of multiple TRPs, traffic needs of high-speed, low-latency, and high-reliability may be met for the terminal.

In a case that a backhaul link between collaborative TRPs is ideal, the collaborative TRPs may share a scheduler, and real-time information exchange may be performed between TRPs. In this case, the collaborative TRPs may share a physical downlink control channel (PDCCH), which is an M-TPR transmission manner of a single-DCI (also known as S-DCI). In a case that a backhaul link between collaborative TRPs has poor capabilities, a time delay of information exchange between collaborative TRPs is relatively large, so that it is difficult to share a PDCCH. In this case, it is suitable to use different PDCCHs for scheduling, that is an M-TPR transmission manner of Multi-DCI (also known as M-DCI).

In an M-TRP scenario, pathlosses from the terminal to different TRPs are often different. In a case that TRP switching occurs, a corresponding uplink pathloss needs to be determined to achieve uplink power control. However, there is currently a lack of technical solutions for determining the uplink pathloss of the terminal.

To this end, the embodiments propose a method and an apparatus for determining a pathloss, which provides a technical solution for determining an uplink pathloss of a terminal.

The method and apparatus for determining the pathloss provided by the present disclosure are described in detail below with reference to the accompanying drawings.

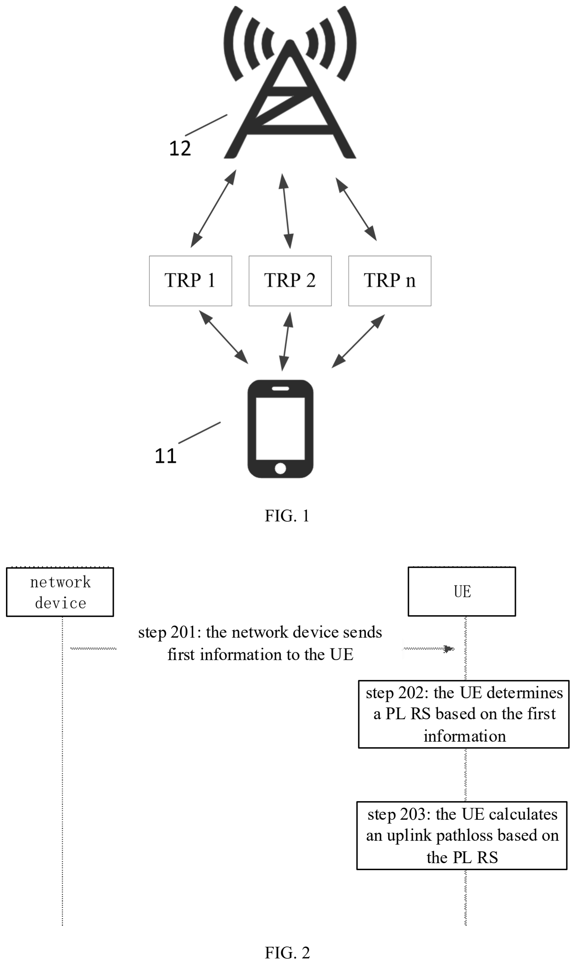

FIG. 1 shows a diagram illustrating an architecture of a communication system provided in an embodiment of the present disclosure. As shown in FIG. 1, the system architecture may include a terminal 11 and a network device 12.

In some examples, the terminal 11 may be called a terminal, a user equipment (UE), a mobile station (MS), a mobile terminal (MT), etc. Terminal 11 may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and the specific device form used by the terminal 11.

In some examples, the network device 12 may be an entity on the network side for sending or receiving signals. For example, the network device 12 may be an evolved NodeB (eNB), a transmission reception point (TRP), a next generation NodeB (gNB) in an NR system, a base station in other mobile communication system in the future, or an access node in a wireless fidelity (WiFi) system. The embodiments of the present disclosure do not limit the specific technology and the specific device form used by the network device 12. The network device 12 in the embodiments of the present disclosure may include a central unit (CU) and a distributed unit (DU), in which the CU may also be called a control unit. A protocol layer of the network device, for example, a base station, may be divided by adopting the CU-DU structure. Some functions of the protocol layer are centrally controlled by the CU, and some or all of remaining functions of the protocol layer are distributed in the DU, which is centrally controlled by the CU.

It should be understood that the communication system in the embodiments of the present disclosure is to more clearly illustrate the technical solution of the embodiments of the present disclosure, and does not constitute a limitation on the technical solution in the embodiments of the present disclosure. Those skilled in the art may know, with the evolution of the system architecture and the emergence of new service scenarios, the technical solution in the embodiments of the present disclosure is also applicable to similar technical problems.

The following embodiments of the present disclosure may be applied to the communication system or some entities shown in FIG. 1, but are not limited thereto. The entities shown in FIG. 1 are examples. The communication system may include all or part of the entities in FIG. 1, or may include other entities not shown in FIG. 1. The number and form of the entities are arbitrary. The connection relationship between the entities is an example. The entities may be connected or disconnected, and the connection may be in any manner, which may be a direct connection or an indirect connection, and may be a wired connection or a wireless connection.

The embodiments of the present disclosure may be applied to long term evolution (LTE), LTE-Advanced (LTE-A), LTE-Beyond (LTE-B), SUPER 3G, IMT-Advanced, a 4th generation mobile communication system (4G), a 5th generation mobile communication system (5G), 5G new radio (NR), future radio access (FRA), a new radio access technology (RAT), new radio (NR), new radio access (NX), future generation radio access (FX), a global system for mobile communication (GSM (that is, a registered trademark)), CDMA2000, an ultra mobile broadband (UMB), IEEE 802.11 (i.e., Wi-Fi (that is, a registered trademark)), IEEE 802.16 (i.e., WiMAX (that is, a registered trademark)), IEEE 802.20, an Ultra-WideBand (UWB), a Bluetooth (that is, a registered trademark), a public land mobile network (PLMN), a device-to-device (D2D) system, a machine-to-machine (M2M) system, an internet of things (IoT) system, vehicle-to-everything (V2X), systems using other communication methods, a next generation system based on them, etc. In addition, multiple systems may also be combined (for example, a combination of the LTE or the LTE-A, and the 5G, etc.) for application.

In some examples, the network device 12 may send first information to the terminal 11. The terminal 11 receives the first information sent by the network device 12. The terminal 11 determines a pathloss reference signal (PL RS) based on the first information, and then calculate an uplink pathloss based on the PL RS. For example, the network device 12 may determine the PL RS used by the terminal 11 for calculating the uplink pathloss, and the terminal 11 calculates the uplink pathloss based on an instruction from the network device 12, using the PL RS indicated by the network device 12.

The embodiments of the present disclosure provide a technical solution for determining the uplink pathloss of the terminal. By applying the technical solution of the embodiments, the pathloss may be calculated for a target TRP, thereby achieving uplink power control.

Further, in order to illustrate the specific execution process of the above communication system, FIG. 2 shows a timing diagram illustrating a method for determining a pathloss provided in an embodiment of the present disclosure. The method is applied to a communication system. As shown in FIG. 2, the method may include the following steps.

Step 201, a network device sends first information to a user equipment (UE).

In some embodiments, the UE receives the first information.

In some embodiments, the first information may be used to determine a pathloss reference signal (PL RS) used by the UE for calculating an uplink pathloss. For example, the first information may be indication information or a signaling, etc., which is used to determine the PL RS.

For example, the first information may directly instruct the UE to use a reference signal A to calculate the uplink pathloss, or may instruct the UE to use any one of reference signals other than a reference signal B to calculate the uplink pathloss, etc. That is, the first information may be used to indicate a reference signal that is required for calculating the uplink pathloss to the UE, or the first information may be used to indicate a reference signal that is not required to be used/needed to be ignored for calculating the uplink pathloss to the UE. In short, the first information may reflect the PL RS used by the UE for calculating the uplink path loss.

In some embodiments, the first information may include at least one of the followings:
downlink control information (DCI); or a media access control control element (MAC CE); etc.

For example, the first information may be sent via the DCI or the MAC CE. For example, the first information is included in the DCI or the MAC CE. For example, the first information may specifically be the DCI or the MAC CE, and so on.

In some embodiments, the first information may be explicit or implicit. For example, the PL RS used to calculate the uplink pathloss may be directly indicated through an element in the first information, and the PL RS used to calculate the uplink pathloss is directly determined based on the element in the first information. Or for example, the PL RS used to calculate the uplink pathloss may be indirectly indicated through an element in the first information, and in a case that the first information includes a specific element, the PL RS used to calculate the uplink pathloss is determined in a manner.

Step 202, the UE determines a pathloss reference signal (PL RS) based on the first information.

The first information may be explicit or implicit.

In a case that the first information is implicit, in some embodiments, the first information may include DCI, and when the DCI includes specific information, the PL RS may be determined in a specific manner. For example, the specific information may be a sounding reference signal (SRS) resource indicator (SRI) or transmission configuration indicator (TCI) state information, etc.

Specifically, for example, the PL RS may be determined based on the SRI included in the DCI. In a case that the DCI, obtained from a network device such as a base station, includes the SRI, then correspondingly, for the UE, step 202 may specifically include: first determining a first SRS resource set included in the SRI, and then determining a PL RS associated with the first SRS resource set from a first correlation relationship between SRS resource sets and PL RSs. It should be understood that the first correlation relationship may be agreed based on a protocol, or may be actively acquired by the UE, or the first correlation relationship may be pre-configured to the UE by the network device such as the base station, or the first correlation relationship may be sent to the UE together with the first information by the network device such as the base station, etc. For example, the network device sends the first correlation relationship between the SRS resource sets and the PL RSs to the UE, correspondingly, the UE may receive the first correlation relationship sent by the network device, and may use the first correlation relationship when determining the PL RS. In addition, the UE may also determine the first correlation relationship based on a protocol agreement, etc. In this embodiment, a TRP corresponding to an uplink beam is determined based on the uplink beam corresponding to the SRS resource set in advance, and then the PL RS corresponding to the SRS resource set is determined, so as to determine the first correlation relationship, so that the PL RS obtained from the first correlation relationship may be used to calculate the uplink pathloss for the corresponding TRP.

The first correlation relationship between the SRS resource sets and the PL RSs may be a one-to-one or many-to-one correlation relationship. That is, one SRS resource set corresponds to one PL RS, or a plurality of SRS resource sets correspond to one PL RS. Based on such correlation relationship, a PL RS associated with the first SRS resource set indicated by the SRI may be found as the PL RS for calculating the uplink pathloss. In addition, the first correlation relationship between the SRS resource sets and the PL RSs may also be a one-to-many association relationship, that is, one SRS resource set corresponds to a plurality of PL RSs. Based on such correlation relationship, a plurality of PL RSs associated with the first SRS resource set indicated by the SRI may be found, and a PL RS may be selected from these PL RSs as the PL RS for calculating the uplink pathloss.

Optionally, the PL RS may be determined based on the TCI state information included in the first information such as the DCI. For example, the DCI includes the TCI state information, correspondingly, for the UE, step 202 may specifically include: determining a first TCI state included in the TCI state information; and determining a PL RS associated with the first TCI state from a second correlation relationship between TCI states and PL RSs. It should be understood that the second correlation relationship may be agreed based on a protocol, or may be actively acquired by the UE, or the second correlation relationship may be pre-configured to the UE by the network device such as the base station, or the second correlation relationship may be sent to the UE together with the first information by the network device such as the base station, etc. For example, the network device sends the second correlation relationship between the TCI states and the PL RSs to the UE, correspondingly, the UE may receive the second correlation relationship sent by the network device, so that the UE may be use the second correlation relationship when determining the PL RS. In addition, the UE may also determine the second correlation relationship based on a protocol agreement, etc. In this embodiment, a TRP corresponding to a beam is determined based on the beam corresponding to the TCI state in advance, and then the PL RS corresponding to the TCI state is determined, so as to determine the second correlation relationship, so that the PL RS obtained from the second correlation relationship may be used to calculate the uplink pathloss for the corresponding TRP.

The second correlation relationship between the TCI states and the PL RSs may be a one-to-one or many-to-one correlation relationship. That is, one TCI state corresponds to one PL RS, or a plurality of TCI states correspond to one PL RS. Based on such correlation relationship, a PL RS associated with the first TCI state included in the TCI state information may be found as the PL RS for calculating the uplink pathloss. In addition, the second correlation relationship between the TCI states and the PL RSs may also be a one-to-many association relationship, that is, one TCI state corresponds to a plurality of PL RSs. Based on such correlation relationship, a plurality of PL RSs associated with the first TCI state included in the TCI state information may be found, and a PL RS may be selected from these PL RSs as the PL RS for calculating the uplink pathloss.

Optionally, the PL RS may be determined based on a control resource set (CORESET) where the DCI in the first information (such as the DCI) is located. For example, the first information may include the DCI, correspondingly, step 202 may specifically include: determining a first control resource set (CORESET) where the DCI is located; and determining a PL RS associated with the first CORESET from a third correlation relationship between CORESETs and PL RSs. It should be understood that the third correlation relationship may be agreed based on a protocol, or may be actively acquired by the UE, or the third correlation relationship may be pre-configured to the UE by the network device such as the base station, or the third correlation relationship may be sent to the UE together with the first information by the network device such as the base station, etc. For example, the network device sends the third correlation relationship between the CORESETs and the PL RSs to the UE, correspondingly, the UE may receive the third correlation relationship sent by the network device, so that the UE may be use the third correlation relationship when determining the PL RS. In addition, the UE may also determine the third correlation relationship based on a protocol agreement, etc. The CORESET may be considered as a specific time frequency resource and may be sent using a corresponding beam. In this embodiment, a PL RS corresponding to the CORESET is determined based on a TRP corresponding to the beam in advance, and then the third correlation relationship is determined, so that the PL RS obtained from the third correlation relationship may be used to calculate the uplink pathloss for the corresponding TRP.

The third correlation relationship between the CORESETs and the PL RSs may be a one-to-one or many-to-one correlation relationship. That is, one CORESET corresponds to one PL RS, or a plurality of CORESETs correspond to one PL RS. Based on such correlation relationship, a PL RS associated with the first CORESET where the DCI is located may be found as the PL RS for calculating the uplink pathloss. In addition, the third correlation relationship between the CORESETs and the PL RSs may also be a one-to-many correlation relationship, that is, one CORESET corresponds to a plurality of PL RSs. Based on such correlation relationship, a plurality of PL RSs associated with the first CORESET where the DCI is located may be found, and a PL RS may be selected from these PL RSs as the PL RS for calculating the uplink pathloss.

It should be understood that the correlation relationship may be determined by one or more of the SRI, the TCI state information or the CORESET. That is, one or more PL RSs are determined based on the corresponding correlation relationship between the PL RS and the SRI, the TCI state information or the CORESET. The PL RSs determined by different methods may be the same, or may be different. In this case, the PL RS for calculating the uplink pathloss may be determined by means of priority. Alternatively, the PL RS for calculating the uplink pathloss may be determined by a pre-agreed method. For example, it is considered that a PL RS determined through the SRS resource set and the first correlation relationship has the highest priority. For example, the PL RS A is determined through the SRS resource set and the first correlation relationship, and the PL RS B different from the PL RS A is determined through the TCI state information and the second correlation relationship. The UE may use the PL RS A as the PL RS for calculating the uplink pathloss. In some examples, step 202 may specifically include: in a case that the DCI includes a sounding reference signal (SRS) resource indicator (SRI), determining the PL RS based on the SRI and a first correlation relationship between SRS resource sets and PL RSs; in a case that the DCI does not include the SRI and the DCI includes transmission configuration indicator (TCI) state information, determining the PL RS based on the TCI state information and a second correlation relationship between TCI states and PL RSs; and in a case that the DCI does not include the SRI and the DCI does not include the TCI state information, determining the PL RS based on a first control resource set (CORESET) where the DCI is located and a third correlation relationship between CORESETs and PL RSs.

By applying this priority processing method, in a case that the DCI includes the SRI, the first correlation relationship between uplink SRS resource sets and the PL RSs is first used to find a corresponding PL RS, which is more suitable for the application scenario. In addition, in a case that the DCI does not include the SRI, but the DCI includes the TCI state information, the second correlation relationship between the TCI states and the PL RSs is used to determine the PL RS. This is because the TCI state may support more beams, and the TCI state may indicate more specifically and flexibly. Further, in a case that the DCI does not include the SRI and the DCI does not include the TCI state information, the PL RS is determined based on the first CORESET where the DCI is located and the third correlation relationship between the CORESETs and the PL RSs to ensure that the PL RS used by the UE to calculate the uplink pathloss may be found.

It should be understood that in addition to the above mentioned optional priority method, other priority methods may also be used, which is not limited in the embodiments. For example, in a case that the DCI includes the TCI state information, the PL RS is determined based on the TCI state information and the second correlation relationship between the TCI states and the PL RSs. In a case that the DCI does not include the TCI state information and the DCI includes the SRI, the PL RS is determined based on the SRI and the first correlation relationship between the SRS resource sets and the PL RSs. In a case that the DCI does not include the SRI and the DCI does not include the TCI state information, the PL RS is determined based on the first CORESET where the DCI is located and the third correlation relationship between the CORESETs and the PL RSs.

The case where the first information is implicit has been described in detail. For example, the PL RS is determined by combining an element included in the first information with the correlation relationship between the element and the PL RS. However, it should be understood that the first information may be explicit, that is, the PL RS for calculating the uplink pathloss is directly indicated by the first information.

In a case that the first information is explicit, in some embodiments, the first information may include the DCI, and the PL RS used for the UE to calculate the uplink pathloss may be directly indicated through the DCI, such as step 202 may specifically include: determining the PL RS based on a separate field set in the DCI. For example, the separate field is set in the DCI to transmit indication information of the PL RS, and the UE determines the PL RS used to calculate the uplink pathloss based on the separate field set in the DCI.

In a case that the first information is explicit, in some embodiments, the first information may include the DCI, and the PL RS used for the UE to calculate the uplink pathloss may be directly indicated through the DCI, such as step 202 may specifically include: determining the PL RS based on value information of a field in the DCI. For example, a specific value of another field in the DCI is used to indicate the PL RS, that is, the PL RS used by the UE to calculate the uplink pathloss.

In a case that the first information is explicit, in some embodiments, the first information may include the MAC CE, and correspondingly, step 202 may specifically include: determining the PL RS based on a separately configured MAC CE. The separately configured MAC CE is a new type of MAC CE, and the new type of MAC CE may indicate the PL RS used by the UE to calculate the uplink pathloss.

In a case that the first information is explicit, in some embodiments, the first information may include the MAC CE, and correspondingly, step 202 may specifically include: determining the PL RS based on a reserved state of a field in the MAC CE. For example, the reserved state of a specific field of an existing MAC CE may also be used to indicate the PL RS used by the UE to calculate the uplink pathloss.

Step 203, the UE calculates an uplink pathloss based on the PL RS.

For example, within an effective time corresponding to the first information, the UE uses the PL RS determined in step 202 to calculate the uplink pathloss, so as to obtain the corresponding uplink pathloss.

In some embodiments, correspondingly, step 203 may specifically include: in a case that at least two PL RSs are determined based on the first information, using the at least two PL RSs respectively to calculate uplink pathlosses, and using one of following first processing rules (A, B, C) to determine the uplink pathloss to be used:

A. selecting a minimum uplink pathloss from at least two calculated uplink pathlosses as the uplink pathloss to be used; B. selecting a maximum uplink pathloss from at least two calculated uplink pathlosses as the uplink pathloss to be used; or C. performing a weighted sum on at least two calculated uplink pathlosses to obtain a result, and using the result as the uplink pathloss to be used.

Furthermore, in some embodiments, the method of the present disclosure may also include: the network device sending a first processing rule, such as one of A, B, and C to the UE. Correspondingly, the UE receives the first processing rule sent by the network device. In addition, the UE may also determine which first processing rule to use based on a protocol agreement. For the first processing rule C, a corresponding weighting coefficient (a first weighting coefficient) may be sent by the network device, or may be agreed upon through the protocol, that is, the UE receives the first weighting coefficient sent by the network device; or the first weighting coefficient is determined based on the protocol agreement. The first weighting coefficient is used for performing the weighted sum on the at least two calculated uplink pathlosses. It should be understood that the first processing rule may be agreed upon through the protocol, or may be actively obtained by the UE, or the first processing rule may be pre-configured to the UE by the network device such as the base station, or the first processing rule may be sent to the UE together with the first information by the network device such as the base station, etc.

For example, the UE only supports one antenna port (which may correspond to an antenna panel). In a case that, according to one of the methods in step 202 (including the scenario in which the first information is explicit or implicit), it is finally determined that at least two PL RSs are obtained, these PL RSs may be used to calculate the uplink pathlosses respectively, and the pathloss to be used may be further selected from these uplink pathlosses according to the first processing rule sent in advance by the network device or the first processing rule agreed upon by the protocol, such as selecting the minimum or maximum uplink pathloss as the uplink pathloss to be used, or performing the weighted sum on these uplink pathlosses and the result is used as the uplink pathloss to be used. The weighting coefficient may be sent by the network device, or agreed upon by the protocol, etc. If the uplink pathlosses M1, M2, and M3 are calculated respectively using these PL RSs, the uplink pathloss M to be finally used is calculated by the following formula 1.

$$M = M1*a1 + M2*a2 + M3*a3 \qquad \text{(formula 1)}$$

Among them, a1 represents the weighting coefficient corresponding to M1, a2 represents the weighting coefficient corresponding to M2, and a3 represents the weighting coefficient corresponding to M3. The three weighting coefficients a1, a2 and a3 may be sent in advance by the network device or obtained through protocol agreement.

In some embodiments, the UE may support a plurality of antenna ports. Accordingly, step 203 may specifically include: in a case that at least two PL RSs are determined based on the first information, determining a PL RS used correspondingly for each antenna port based on a fourth correlation relationship between PL RSs and antenna ports, for calculating the uplink pathloss.

Further, in some embodiments, the method of the present disclosure may also include: the network device sending the fourth correlation relationship between the PL RSs and the antenna ports to the UE. Correspondingly, the UE receives the fourth correlation relationship sent by the network device, and then the UE may accurately find, according to the fourth correlation relationship between the PL RSs and the antenna ports, a PL RS corresponding to each antenna port to calculate the uplink pathloss. In addition, the UE may also determine the fourth correlation relationship through a protocol agreement, etc. It should be understood that the fourth correlation relationship may be agreed upon through a protocol, or may be actively obtained by the UE, or the fourth correlation relationship may be pre-configured to the UE by the network device such as the base station, or the fourth correlation relationship may be sent to the UE by the network device such as the base station together with the first information, etc.

In some embodiments, in a case that a plurality of PL RSs are used correspondingly for a first antenna port of the UE, the plurality of PL RSs are used respectively to calculate uplink pathlosses, and one of following second processing rules (a, b, c) is used to determine an uplink pathloss to be used for the first antenna port:

a. selecting a minimum uplink pathloss from a plurality of calculated uplink pathlosses as the uplink pathloss to be used for the first antenna port; b. selecting a maximum uplink pathloss from a plurality of calculated uplink pathlosses as the uplink pathloss to be used for the first antenna port; or c. performing a weighted sum on a plurality of calculated uplink pathlosses to obtain a result, and using the result as the uplink pathloss to be used for the first antenna port.

Furthermore, in some embodiments, the method of the present disclosure may also include: the network device sending a second processing rule such as one of the above a, b, and c to the UE. Correspondingly, the UE receives the second processing rule sent by the network device. In addition, the UE may also determine which second processing rule to use based on a protocol agreement. For the second processing rule C, a corresponding weighting coefficient may be sent by the network device, or may be agreed upon through the protocol. It should be understood that the second processing rule may be agreed upon through the protocol, or may be actively obtained by the UE, or the second processing rule may be pre-configured to the UE by the network device such as the base station, or the second processing rule may be sent to the UE together with the first information by the network device such as the base station, etc.

For example, the UE supports a plurality of antenna ports (which may correspond to a plurality of antenna panels). In a case that, according to one of the methods in step 202, a plurality of PL RSs are finally determined, and two PL RSs corresponding to antenna port X are determined based on the fourth correlation relationship between the PL RSs and the antenna ports, the two PL RSs may be used to calculate the uplink pathlosses respectively, and the uplink pathloss required to be used by the antenna port X may be further selected from the two uplink pathlosses based on the second processing rule sent in advance by the network device or the second processing rule agreed upon by the protocol, such as selecting the minimum or maximum uplink pathloss as the uplink pathloss required to be used by the antenna port X, or performing the weighted sum on the two uplink pathlosses and the result obtained is used as the uplink pathloss required to be used by the antenna port X. The weighting coefficient (a second weighting coefficient) may be sent from the network device, or agreed upon by the protocol, etc. That is, the UE receives the second weighting coefficient sent by the network device; or, the second weighting coefficient is determined based on a protocol agreement, in which the second weighting coefficient is used for performing the weighted sum on the plurality of uplink pathlosses. For example, for the antenna port X, the two PL RSs are used to calculate the uplink pathlosses N1 and N2 respectively, and the uplink pathloss N that antenna port X ultimately needs to use is calculated using the following formula 2.

$$N = N1*b1 + N2*b2 \qquad \text{(formula 2)}$$

Among them, b1 represents the weighting coefficient corresponding to N1, and b2 represents the weighting coefficient corresponding to N2. The two weighting coefficients b1 and b2 may be sent in advance by the network device or obtained based on the protocol agreement.

In some embodiments of the present disclosure, the UE and the network device described may be the terminal 11 and the network device 12 in the aforementioned embodiments.

This embodiment provides a technical solution for determining the uplink pathloss of the UE. By applying the technical solution of this embodiment, the pathloss may be calculated for the target TRP, thereby achieving uplink power control.

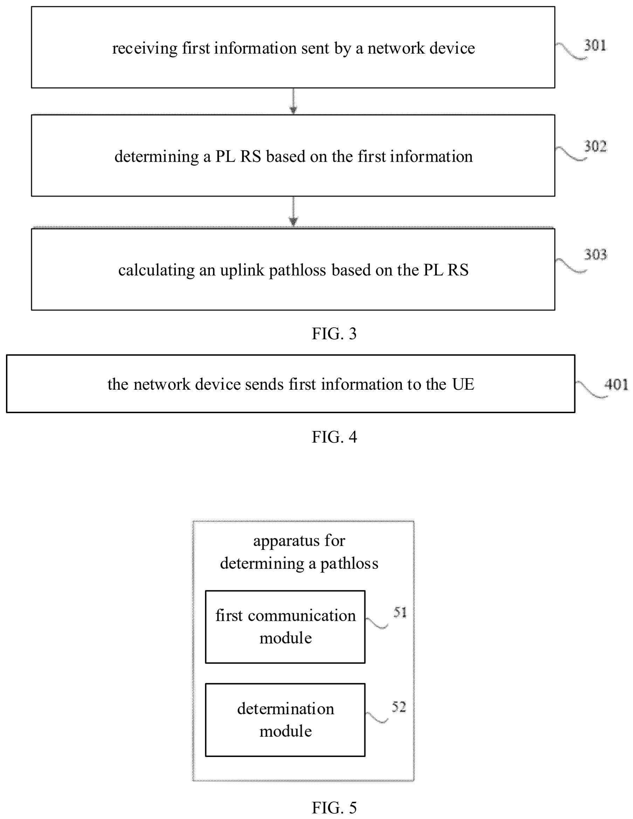

To illustrate the specific execution process of a user equipment (UE), FIG. 3 shows a flowchart illustrating a method for determining a pathloss provided in an embodiment of the present disclosure. The method is performed by the UE, and may include the following steps.

Step 301, first information sent by a network device is received.

The first information may be used to determine a pathloss reference signal (PL RS) used by the UE for calculating an uplink pathloss.

In some embodiments, the first information may include at least one of the followings:
downlink control information (DCI); or a media access control control element (MAC CE); etc.

In some embodiments, the first information may be explicit or implicit.

Step 302, a pathloss reference signal (PL RS) is determined based on the first information.

In a case that the first information is implicit, in some embodiments, the first information may include DCI, and when the DCI includes a sounding reference signal (SRS) resource indicator (SRI), correspondingly, step 302 may specifically include: first determining a first SRS resource set included in the SRI, and then determining a PL RS associated with the first SRS resource set from a first correlation relationship between SRS resource sets and PL RSs.

One SRI corresponds to one SRS resource set. In a specific SRS resource set, the UE may use a specific beam to send an SRS signal. Therefore, the SRI represents an uplink beam, that is, the SRI may be used for uplink beam indication. In this embodiment, a corresponding target TRP may be determined based on the uplink beam, and then the PL RS determined from the first correlation relationship is used to calculate the uplink pathloss for the target TRP.

In some embodiments, the method of the present disclosure may further include: the UE receiving the first correlation relationship sent by the network device; or determining the first correlation relationship based on a protocol agreement.

In a case that the first information is implicit, in some embodiments, the first information may include DCI, and when the DCI includes transmission configuration indicator (TCI) state information, correspondingly, step 302 may specifically include: firstly determining a first TCI state included in the TCI state information; and determining a PL RS associated with the first TCI state from a second correlation relationship between TCI states and PL RSs.

The 5G new radio (NR) uses a TCI state for beam indication, and the TCI state is associated with a specific reference signal, so that a beam of the reference signal associated with the TCI state may be represented by a TCI state identifier (ID). In a case that the UE receives a TCI state indication, for downlink reception: in a specific time period, the UE believes that the network device uses the beam of the reference signal associated with the TCI state for transmission; and for uplink transmission: in a specific time period, the UE uses a receiving spatial filter corresponding to the reference signal associated with the TCI state for transmission. In this embodiment, the UE may receive an uplink (UL) TCI state sent by the network device. In this embodiment, the corresponding target TRP may be determined based on the beam indicated by the UL TCI state, and then the downlink reference signal associated with the UL TCI state determined from the second correlation relationship is used as the PL RS to calculate the uplink pathloss for the target TRP.

In some embodiments, the method of the present disclosure may further include: the UE receiving the second correlation relationship sent by the network device; or determining the second correlation relationship based on a protocol agreement, etc.

In a case that the first information is implicit, in some embodiments, the first information may include DCI, and correspondingly, step 302 may specifically include: firstly determining a first control resource set (CORESET) where the DCI is located; and determining a PL RS associated with the first CORESET from a third correlation relationship between CORESETs and PL RSs.

A channel that carries the DCI is a PDCCH channel, that is, information transmitted on the PDCCH channel is called the DCI. The CORESET includes a downlink time frequency resource in a specific area, which is used to carry the PDCCH (DCI). In a case of multi-DCI M-TRP transmission, one CORESET pool corresponds to one TRP. A CORESET pool corresponds to one TRP. A TRP generally has a plurality of beams (that is, corresponding reference signals). The CORESET generally corresponds to one beam, which is more targeted. Therefore, in this embodiment, the corresponding target TRP may be determined based on the first CORESET where the DCI is located, and then for the target TRP, the uplink pathloss is calculated using the path loss reference signal determined from the third correlation relationship.

In some embodiments, the method of the present disclosure may further include: the UE receiving the third correlation relationship sent by the network device; or determining the third correlation relationship based on a protocol agreement, etc.

In some embodiments, the DCI may include an SRI; or the DCI does not include an SRI, and the DCI includes TCI state information; or the DCI does not include an SRI and the DCI does not include TCI state information.

In a case that the first information is explicit, in some embodiments, the first information may include the DCI. Accordingly, the step 302 may specifically include: based on a separate field set in the DCI, determining the PL RS used for the UE to calculate the uplink pathloss.

In a case that the first information is explicit, in some embodiments, the first information may include the DCI. Accordingly, the step 302 may specifically include: based on value information of a field in the DCI, determining the PL RS used for the UE to calculate the uplink pathloss.

In a case that the first information is explicit, in some embodiments, the first information may include the MAC CE, and accordingly, step 302 may specifically include: determining the PL RS based on a separately configured MAC CE. The separately configured MAC CE is a new type of MAC CE, and the new type of MAC CE may indicate the PL RS used by the UE to calculate the uplink pathloss.

In a case that the first information is explicit, in some embodiments, the first information may include the MAC CE, and accordingly, step 302 may specifically include: based on a reserved state of a field in the MAC CE, determining the PL RS used for the UE to calculate the uplink pathloss.

Step 303, an uplink pathloss is calculated based on the determined PL RS.

For example, within the effective time corresponding to the first information, the UE uses the PL RS determined in the step 302 to calculate the uplink pathloss, so as to obtain the corresponding uplink pathloss. Based on the uplink pathloss, the transmit power of a physical uplink shared channel (PUSCH), the transmit power of a physical uplink control channel (PUCCH), or the transmit power of a sounding reference signal (SRS), etc., is calculated by a formula.

In some embodiments, correspondingly, step 303 may specifically include: in a case that at least two PL RSs are determined based on the first information, using the at least two PL RSs respectively to calculate uplink pathlosses, and using one of following first processing rules (A, B, C) to determine the uplink pathloss to be used:

A. selecting a minimum uplink pathloss from at least two calculated uplink pathlosses as the uplink pathloss to be used; B. selecting a maximum uplink pathloss from at least two calculated uplink pathlosses as the uplink pathloss to be used; or C. performing a weighted sum on at least two calculated uplink pathlosses to obtain a result, and using the result as the uplink pathloss to be used.

In some embodiments, the method of the present disclosure may also include: the UE receiving a first processing rule such as one of A, B or C sent by the network device; or determining a first processing rule based on a protocol agreement.

For example, the UE only supports one antenna port (which may correspond to an antenna panel). In a case that, according to one of the methods in step 302 (including the scenario in which the first information is explicit or implicit), it is finally determined that at least two PL RSs are obtained, these PL RSs may be used to calculate the uplink pathlosses respectively, and the pathloss to be used may be further selected from these uplink pathlosses according to the first processing rule sent in advance by the network device or the first processing rule agreed upon by the protocol, such as selecting the minimum or maximum uplink pathloss as the uplink pathloss to be used, or performing the weighted sum on these uplink pathlosses and the result is used as the uplink pathloss to be used. The weighting coefficient may be sent by the network device, or agreed upon by the protocol, etc. That is, a first weighting coefficient sent by the network device is received; or, a first weighting coefficient is determined based on a protocol agreement, in which the first weighting coefficient is used for performing the weighted sum on the at least two calculated uplink pathlosses.

In some embodiments, the UE may support a plurality of antenna ports. Accordingly, step 203 may specifically include: in a case that at least two PL RSs are determined based on the first information, determining a PL RS used correspondingly for each antenna port based on a fourth correlation relationship between PL RSs and antenna ports, for calculating the uplink pathloss.

In some embodiments, the method of the present disclosure may also include: the UE receiving the fourth correlation relationship sent by the network device; or determining the fourth correlation relationship based on a protocol agreement.

In some embodiments, in a case that a plurality of PL RSs are used correspondingly for a first antenna port of the UE, the plurality of PL RSs are used respectively to calculate uplink pathlosses, and one of following second processing rules (a, b, c) is used to determine an uplink pathloss to be used for the first antenna port:

a. selecting a minimum uplink pathloss from a plurality of calculated uplink pathlosses as the uplink pathloss to be used for the first antenna port; b. selecting a maximum uplink pathloss from a plurality of calculated uplink pathlosses as the uplink pathloss to be used for the first antenna port; or c. performing a weighted sum on a plurality of calculated uplink pathlosses to obtain a result, and using the result as the uplink pathloss to be used for the first antenna port.

In some embodiments, the method of the present disclosure may also include: the UE receiving a second processing rule such as one of the above a, b, and c sent by the network device; or determining a second processing rule based on a protocol agreement. The weighting coefficient may be obtained by the network device, or agreed upon by a protocol, etc. That is, a second weighting coefficient sent by the network device is received; or a second weighting coefficient is determined based on a protocol agreement, in which the second weighting coefficient is used for performing the weighted sum on the plurality of uplink pathlosses.

This embodiment provides a technical solution for determining the uplink pathloss of the UE. By applying the technical solution of this embodiment, the pathloss may be calculated for the target TRP, thereby achieving uplink power control.

FIG. 4 shows a flowchart illustrating a method for determining a pathloss provided in an embodiment of the present disclosure. As shown in FIG. 4, the method is performed by a network device, and may include the following steps.

Step 401, the network device sends first information to a user equipment (UE).

The first information is used to determine a pathloss reference signal (PL RS) and the PL RS is used to calculate an uplink pathloss of the UE.

In some embodiments, the first information may include at least one of the followings:

downlink control information (DCI); or a media access control control element (MAC CE); etc.

In some embodiments, the DCI may include a sounding reference signal (SRS) resource indicator (SRI). Accordingly, the method of the embodiment may also include: sending a first correlation relationship between SRS resource sets and PL RSs to the UE, in which the first correlation relationship is used to determine the PL RS used by the UE to calculate the uplink pathloss.

In some embodiments, the DCI may include transmission configuration indicator (TCI) state information. Accordingly, the method of the embodiment may also include: sending a second correlation relationship between TCI states and PL RSs to the UE, in which the second correlation relationship is used to determine the PL RS used by the UE to calculate the uplink pathloss.

In some embodiments, the method of the present disclosure may also include: sending a third correlation relationship between control resource sets (CORESET) and PL RSs to the UE, in which the third correlation relationship is used to determine the PL RS used by the UE to calculate the uplink pathloss.

In some embodiments, the DCI may include an SRI; or the DCI does not include an SRI, and the DCI includes TCI state information; or the DCI does not include an SRI and the DCI does not include TCI state information.

In some embodiments, a separate field in the DCI is used to determine the PL RS used by the UE to calculate the uplink pathloss.

In some embodiments, value information of a field in the DCI is used to determine the PL RS used by the UE to calculate the uplink pathloss.

In some embodiments, a separately configured MAC CE is used to determine the PL RS used by the UE to calculate the uplink pathloss.

In some embodiments, a reserved state of a field in the MAC CE is used to determine the PL RS used by the UE to calculate the uplink pathloss.

In some embodiments, the method of the present disclosure may also include: sending a first processing rule to the UE, in which the first processing rule may be used to calculate uplink pathlosses using at least two PL RSs respectively and determine the uplink pathloss to be used from the uplink pathlosses, in a case that the UE determines the at least two PL RSs based on the first information.

In some embodiments, the method of the present disclosure may also include: sending a first weighting coefficient to the UE, in which the first weighting coefficient is used for performing a weighted sum on at least two uplink pathlosses.

In some embodiments, the method of the present disclosure may also include: sending a fourth correlation relationship between PL RSs and antenna ports to the UE.

In some embodiments, the method of the present disclosure may also include: sending a second processing rule to the UE, in which the second processing rule is used to calculate uplink pathlosses using a plurality of PL RSs respectively and determine an uplink pathloss to be used for a first antenna port from the uplink pathlosses, in a case that the plurality of PL RSs are used correspondingly for the first antenna port of the UE.

In some embodiments, the method of the present disclosure may also include: sending a second weighting coefficient to the UE, in which the second weighting coefficient is used for performing a weighted sum on the plurality of uplink pathlosses to obtain the uplink pathloss to be used for the first antenna port.

For the description of the specific examples in the embodiment, reference may be made to the corresponding description of the embodiments in FIG. 1 to 3, which will not be repeated here.

This embodiment provides a technical solution for determining the uplink pathloss of the UE. By applying the technical solution of this embodiment, the pathloss may be calculated for the target TRP, thereby achieving uplink power control.

In the above embodiments of the present disclosure, the methods provided by the embodiments of the present disclosure are introduced from the perspectives of the network device and the terminal respectively. In order to implement the various functions in the methods provided by the embodiments of the present disclosure, the network device and the terminal each may include a hardware structure or a software module, and implement the above various functions in the form of a hardware structure, a software module, or a hardware structure plus a software module. Any of the above functions may be implemented in the form of a hardware structure, a software module, or a hardware structure plus a software module.

Corresponding to a method for determining a pathloss provided in the above mentioned embodiments, the present disclosure also provides an apparatus for determining the pathloss. Since the apparatus for determining the pathloss provided in the embodiments of the present disclosure corresponds to the method for determining the pathloss provided in the above mentioned embodiments, the implementation method of the method for determining the pathloss is also applicable to the apparatus for determining the pathloss provided in the embodiments and will not be described in detail in the embodiments.

FIG. 5 is a block diagram illustrating an apparatus for determining a pathloss provided in an embodiment of the present disclosure. The apparatus for determining the pathloss may be applied to a user equipment (UE).

As shown in FIG. 5, the apparatus may include: a first communication module 51, configured to receive first information sent by a network device; and a determination module 52, configured to determine a pathloss reference signal (PL RS) based on the first information and calculate an uplink pathloss based on the PL RS.

In some embodiments, the first information may include at least one of the followings:
downlink control information (DCI); or a media access control control element (MAC CE); etc.

In some embodiments, the DCI includes: a sounding reference signal (SRS) resource indicator (SRI); and the determination module 52 is specifically configured to determine a first SRS resource set included in the SRI, and determine a PL RS associated with the first SRS resource set from a first correlation relationship between SRS resource sets and PL RSs.

In some embodiments, the determination module 52 is also configured to receive the first correlation relationship sent by the network device; or determine the first correlation relationship based on a protocol agreement.

In some embodiments, the DCI includes transmission configuration indicator (TCI) state information; and the determination module 52 is specifically configured to determine a first TCI state included in the TCI state information; and determine a PL RS associated with the first TCI state from a second correlation relationship between TCI states and PL RSs.

In some embodiments, the determination module 52 is also configured to receive the second correlation relationship sent by the network device; or determine the second correlation relationship based on a protocol agreement.

In some embodiments, the determination module 52 is specifically configured to determine a first control resource set (CORESET) where the DCI is located; and determine a PL RS associated with the first CORESET from a third correlation relationship between CORESETs and PL RSs.

In some embodiments, the determination module 52 is also configured to receive the third correlation relationship sent by the network device; or determine the third correlation relationship based on a protocol agreement.

In some embodiments, the determination module 52 is specifically configured to, in a case that the DCI includes a sounding reference signal (SRS) resource indicator (SRI), determine the PL RS based on the SRI and a first correlation relationship between SRS resource sets and PL RSs; in a case that the DCI does not include an SRI and the DCI includes transmission configuration indicator (TCI) state information, determine the PL RS based on the TCI state information and a second correlation relationship between TCI states and PL RSs; and in a case that the DCI does not include an SRI and the DCI does not include TCI state information, determine the PL RS based on a first control resource set (CORESET) where the DCI is located and a third correlation relationship between CORESETs and PL RSs.

In some embodiments, the determination module 52 is specifically configured to determine the PL RS based on a separate field set in the DCI.

In some embodiments, the determination module 52 is specifically configured to determine the PL RS based on value information of a field in the DCI.

In some embodiments, the determination module 52 is specifically configured to determine the PL RS based on a separately configured MAC CE.

In some embodiments, the determination module 52 is specifically configured to determine the PL RS based on a reserved state of a field in the MAC CE.

In some embodiments, the determination module 52 is specifically configured to, in a case that at least two PL RSs are determined based on the first information, use the at least two PL RSs respectively to calculate uplink pathlosses, and use one of following first processing rules to determine the uplink pathloss to be used:

selecting a minimum uplink pathloss from at least two calculated uplink pathlosses as the uplink pathloss to be used; selecting a maximum uplink pathloss from at least two calculated uplink pathlosses as the uplink pathloss to be used; or performing a weighted sum on at least two calculated uplink pathlosses to obtain a result, and using the result as the uplink pathloss to be used.

In some embodiments, the determination module 52 is also configured to receive a first processing rule sent by the network device; or determine a first processing rule based on a protocol agreement.

In some embodiments, the determination module 52 is also configured to receive a first weighting coefficient sent by the network device; or, determine a first weighting coefficient based on a protocol agreement, in which the first weighting coefficient is used for performing the weighted sum on the at least two calculated uplink pathlosses.

In some embodiments, the determination module 52 is specifically configured to, in a case that at least two PL RSs are determined based on the first information, determine a PL RS used correspondingly for each antenna port based on a fourth correlation relationship between PL RSs and antenna ports, for calculating the uplink pathloss.

In some embodiments, the determination module 52 is also configured to receive the fourth correlation relationship sent by the network device; or determine the fourth correlation relationship based on a protocol agreement.

In some embodiments, the determination module 52 is specifically configured to, in a case that a plurality of PL RSs are used correspondingly for a first antenna port of the UE, use the plurality of PL RSs to respectively calculate uplink pathlosses, and use one of following second processing rules to determine an uplink pathloss to be used for the first antenna port:

selecting a minimum uplink pathloss from a plurality of calculated uplink pathlosses as the uplink pathloss to be used for the first antenna port;

selecting a maximum uplink pathloss from a plurality of calculated uplink pathlosses as the uplink pathloss to be used for the first antenna port;

or performing a weighted sum on a plurality of calculated uplink pathlosses to obtain a result, and using the result as the uplink pathloss to be used for the first antenna port.

In some embodiments, the determination module 52 is also configured to receive a second processing rule sent by the network device; or determine a second processing rule based on a protocol agreement.

In some embodiments, the determination module 52 is also configured to receive a second weighting coefficient sent by the network device; or determine a second weighting coefficient based on a protocol agreement, in which the second weighting coefficient is used for performing the weighted sum on the plurality of uplink pathlosses.

This embodiment provides a technical solution for determining the uplink pathloss of the UE. By applying the technical solution of this embodiment, the pathloss may be calculated for the target TRP, thereby achieving uplink power control.

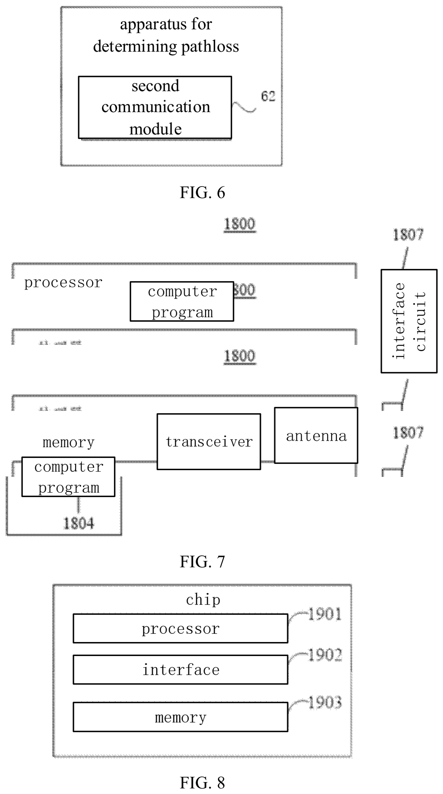

FIG. 6 is a block diagram illustrating an apparatus for determining a pathloss provided in an embodiment of the present disclosure. The apparatus for determining the pathloss may be applied to a network device.

As shown in FIG. 6, the apparatus may include: a second communication module 61, configured to send first information to a user equipment (UE); in which the first information is used to determine a pathloss reference signal (PL RS) and the PL RS is used to calculate an uplink pathloss of the UE.

In some embodiments, the second communication module 61 is also configured to send first waveform information to the UE, in which the first waveform information is communication waveform information supported by the network device; and receive second waveform information sent by the UE, in which the second waveform information is supportable communication waveform information determined by the UE based on the first waveform information.

In some embodiments, the first information may include at least one of the followings:
downlink control information (DCI); or a media access control control element (MAC CE); etc.

In some embodiments, the DCI includes a sounding reference signal (SRS) resource indicator (SRI).

In some embodiments, the second communication module 61 is also configured to send a first correlation relationship between SRS resource sets and PL RSs to the UE.

In some embodiments, the DCI includes transmission configuration indicator (TCI) state information.

In some embodiments, the second communication module 61 is also configured to send a second correlation relationship between TCI states and PL RSs to the UE.

In some embodiments, the second communication module 61 is also configured to send a third correlation relationship between control resource sets (CORESETs) and PL RSs to the UE.

In some embodiments, a separate field in the DCI is used to determine the PL RS.

In some embodiments, value information of a field in the DCI is used to determine the PL RS.

In some embodiments, a separately configured MAC CE is used to determine the PL RS.

In some embodiments, a reserved state of a field in the MAC CE is used to determine the PL RS.

In some embodiments, the second communication module 61 is also configured to send a first processing rule to the UE, in which the first processing rule is used to calculate uplink pathlosses using at least two PL RSs respectively and determine the uplink pathloss to be used from the uplink pathlosses, in a case that the UE determines the at least two PL RSs based on the first information.

In some embodiments, the second communication module 61 is also configured to send a first weighting coefficient to the UE, in which the first weighting coefficient is used for performing a weighted sum on at least two uplink pathlosses.

In some embodiments, the second communication module 61 is also configured to send a fourth correlation relationship between PL RSs and antenna ports to the UE.

In some embodiments, the second communication module 61 is also configured to send a second processing rule to the UE, in which the second processing rule is used to calculate uplink pathlosses using a plurality of PL RSs respectively and determine an uplink pathloss to be used for a first antenna port from the uplink pathlosses, in a case that the plurality of PL RSs are used correspondingly for the first antenna port of the UE.

In some embodiments, the second communication module 61 is also configured to send a second weighting coefficient to the UE, in which the second weighting coefficient is used for performing a weighted sum on the plurality of uplink pathlosses to obtain the uplink pathloss to be used for the first antenna port.

This embodiment provides a technical solution for determining the uplink pathloss of the UE. By applying the technical solution of this embodiment, the pathloss may be calculated for the target TRP, thereby achieving uplink power control.

As illustrated in FIG. 7, which is a diagram illustrating a structure of another communication apparatus 1800 provided in an embodiment of the present disclosure. The communication apparatus 1800 may be a network device, a terminal, a chip, a system on chip or a processor that supports the network device to implement the method, or a chip, a system on chip or a processor that supports the terminal to implement the method. The apparatus may be configured to implement the method described in the method embodiments. For details, reference may be made to the above method embodiments.

The communication apparatus 1800 may include one or more processors 1801. The processor 1801 may include a general purpose processor or a dedicated processor. For example, the processor 1801 may be a baseband processor or a central processor. The baseband processor may be configured to process a communication protocol and communication data, and the central processor may be configured to control a communication apparatus (e.g., a base station, a baseband chip, a terminal, a terminal chip, a DU or CU, etc.), to execute a computer program, and process data of the computer program.

Optionally, the communication apparatus 1800 may further include one or more memories 1802 with a computer program 1804 stored thereon. The processor 1801 executes the computer program 1804 so that the communication apparatus 1800 performs the method as described in the above method embodiments. Optionally, the memory 1802 may further store data. The communication apparatus 1800 and the memory 1802 may be independently configured or integrated together.

Optionally, the communication apparatus 1800 may further include a transceiver 1805 and an antenna 1806. The transceiver 1805 may be referred to as a transceiving unit, a transceiver or a transceiving circuit, which may be configured to achieve a transceving function. The transceiver 1805 may include a receiver and a transmitter. The receiver may be referred to as a receiver or a receiving circuit, etc., for implementing a receiving function; the transmitter may be referred to as a transmitter or a transmission circuit, etc. for implementing a transmission function.

Optionally, the communication apparatus 1800 may further include one or more interface circuits 1807. The interface circuit 1807 is configured to receive code instructions and transmit the code instructions to the processor 1801. The processor 1801 runs the code instructions so that the communication apparatus 1800 performs the method as described in the above method embodiment.

In an implementation, the processor 1801 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 1801 may be stored with a computer program 1803. The computer program 1803 runs on the processor 1801 so that the communication apparatus 1800 performs the method as described in the above method embodiments. The computer program 1803 may be solidified in the processor 1801, in which case the processor 1801 may be implemented by a hardware.

In an implementation, the communication apparatus 1800 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may also be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs), etc.

The communication apparatus described in the above embodiments may be a network device or a terminal (for example the terminal in the preceding embodiments of the method), but the scope of the communication apparatus described in the present disclosure is not limited thereto, and a structure of the communication apparatus may not be subject to FIG. 7. The communication apparatus may be a stand-alone device or may be a part of a larger device. For example, the communication apparatus may be:

(1) a stand-alone integrated circuit (IC), or a chip, or a system on chip or a subsystem;
(2) a set of one or more ICs, which, optionally, may also include a storage component configured to store data and a computer program;
(3) an ASIC, such as a Modem;
(4) a module that may be embedded within other devices;
(5) a receiver, a terminal, a smart terminal, a cellular phone, a wireless device, a handset, a mobile unit, an in-vehicle device, a network device, a cloud device, an artificial intelligence device, etc.; and
(6) others, and so forth.

For the case that the communication apparatus may be a chip or a system on chip, please refer to a diagram of a structure of a chip as illustrated in FIG. 8. The chip illustrated in FIG. 8 may include a processor 1901 and an interface 1902. There may be one or more processors 601, and there may be a plurality of interfaces 1902.

Optionally, the chip further includes a memory 1903. The memory 1903 is configured to save a necessary computer program and data.

Those skilled in the related art may understand that, various illustrative logical blocks and steps listed in embodiments of the present disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the present disclosure.

A readable storage medium with instructions stored thereon is further provided in the disclosure. When the instructions are executed by a computer, steps in the any one method embodiment are implemented.

A computer program product is further provided. The computer program product implements functions of the above any one method embodiment when executed by a processor.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another in a wire (e.g., a coaxial cable, an optical fiber, a digital subscriber line (DSL)) or wireless (e.g., infrared, wireless, microwave) manner. The computer-readable storage medium may be any available medium that may be accessed by a computer or a data storage device, such as a server and a data center, that integrates one or more available media. The available media may be magnetic media (e.g., floppy disks, hard disks, magnetic tapes), optical media (e.g., high-density digital video discs (DVDs)), or semiconductor media (e.g., solid state disks, SSD)) etc.

Those skilled in the art may understand that various numbers such as first and second involved in the disclosure are distinguished merely for convenience of description, and are not intended to limit the scope of embodiments of the disclosure, but also to indicate an order of precedence.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

As used herein, terms "machine-readable medium" and "computer-readable medium" refer to any computer program product, device and/or apparatus configured to provide machine instructions and/or data to a programmable processor (for example, a magnetic disk, an optical disk, a memory and a programmable logic device (PLD)), and includes machine-readable media that receive machine instructions as machine-readable signals. The term "machine-readable signals" refers to any signal used to provide machine instructions and/or data to a programmable processor.

The systems and technologies described herein may be implemented in a computing system that includes back-end components (for example, as a data server), a computing system that includes middleware components (for example, an application server), or a computing system that includes front-end components (for example, a user computer with a graphical user interface or a web browser, through which the user may interact with the implementation of the systems and technologies described herein), or a computing system including any combination of the back-end components, the middleware components or the front-end components. The components of the system may be interconnected by digital data communication (e.g., a communication network) in any form or medium. Examples of the communication network include: a local area network (LAN), a wide area network (WAN), and the Internet.

Computer systems may include a client and a server. The client and server are generally remote from each other and typically interact through the communication network. A client-server relationship is generated by computer programs running on respective computers and having a client-server relationship with each other.

It should be understood that the various forms of processes shown above may be used to reorder, add or delete steps. For example, the steps recorded in this disclosure may be executed in parallel, sequentially or in different orders, as long as the desired results of the technical solution of the present disclosure may be achieved, and this document is not limited here.

In addition, it should be understood that the various embodiments described in the present disclosure may be implemented separately or in combination with other embodiments when the scheme permits.

Those skilled in the related art may realize that, the units and algorithm steps of each example described in conjunction with the embodiments disclosed herein may be implemented in an electronic hardware or a combination of an electronic hardware and a computer software. Whether the functions are executed by the hardware or the software depends on a specific application and a design constraint of the technical solution. Those skilled in the art may adopt different methods for each specific application to implement the described functions, but such implementation should not be considered beyond the scope of the present disclosure.

Those skilled in the art may clearly understand that, specific working processes of systems, apparatuses and units described above may refer to corresponding processes in the above method embodiments, which will not be repeated here.

The above are only implementations of the disclosure, but the protection scope of the disclosure is not limited thereto. Any changes or substitutions that may be easily considered by those skilled in the art within the scope of the present disclosure should be covered by the scope of protection of the disclosure. Therefore, the protection scope of the present disclosure should be subject to the protection scope of claims.

**Claims**

1. A method for determining a pathloss, performed by a user equipment (UE), comprising:

   receiving first information sent by a network device;
   determining a pathloss reference signal (PL RS) based on the first information; and
   calculating an uplink pathloss based on the PL RS.

2. The method according to claim 1, wherein the first information comprises at least one of:

   downlink control information (DCI); or
   a media access control control element (MAC CE).

3. The method according to claim 2, wherein the DCI comprises a sounding reference signal (SRS) resource indicator (SRI);
   wherein determining the PL RS based on the first information comprises:

   determining a first SRS resource set comprised in the SRI; and
   determining a PL RS associated with the first SRS resource set from a first correlation relationship between SRS resource sets and PL RSs.

4. The method according to claim 3, further comprising:

   receiving the first correlation relationship sent by the network device; or
   determining the first correlation relationship based on a protocol agreement.

5. The method according to claim 2, wherein the DCI comprises transmission configuration indicator (TCI) state information;
wherein determining the PL RS based on the first information comprises:

> determining a first TCI state comprised in the TCI state information; and
> determining a PL RS associated with the first TCI state from a second correlation relationship between TCI states and PL RSs.

6. The method according to claim 5, further comprising:

> receiving the second correlation relationship sent by the network device; or
> determining the second correlation relationship based on a protocol agreement.

7. The method according to claim 2, wherein determining the PL RS based on the first information comprises:

> determining a first control resource set (CORESET) where the DCI is located; and
> determining a PL RS associated with the first CORESET from a third correlation relationship between CORESETs and PL RSs.

8. The method according to claim 7, further comprising:

> receiving the third correlation relationship sent by the network device; or
> determining the third correlation relationship based on a protocol agreement.

9. The method according to claim 2, wherein determining the PL RS based on the first information comprises:

> in a case that the DCI comprises a sounding reference signal (SRS) resource indicator (SRI), determining the PL RS based on the SRI and a first correlation relationship between SRS resource sets and PL RSs;
> in a case that the DCI does not comprise the SRI and the DCI comprises transmission configuration indicator (TCI) state information, determining the PL RS based on the TCI state information and a second correlation relationship between TCI states and PL RSs; and
> in a case that the DCI does not comprise the SRI and the DCI does not comprise the TCI state information, determining the PL RS based on a first control resource set (CORESET) where the DCI is located and a third correlation relationship between CORESETs and PL RSs.

10. The method according to claim 2, wherein determining the PL RS based on the first information comprises:
determining the PL RS based on a separate field set in the DCI.

11. The method according to claim 2, wherein determining the PL RS based on the first information comprises:
determining the PL RS based on value information of a field in the DCI.

12. The method according to claim 2, wherein determining the PL RS based on the first information comprises:
determining the PL RS based on a separately configured MAC CE.

13. The method according to claim 2, wherein determining the PL RS based on the first information comprises:
determining the PL RS based on a reserved state of a field in the MAC CE.

14. The method according to any one of claims 1 to 13, wherein calculating the uplink pathloss based on the PL RS comprises:
in a case that at least two PL RSs are determined based on the first information, using the at least two PL RSs respectively to calculate uplink pathlosses, and using one of following first processing rules to determine the uplink pathloss to be used:

> selecting a minimum uplink pathloss from at least two calculated uplink pathlosses as the uplink pathloss to be used;
> selecting a maximum uplink pathloss from at least two calculated uplink pathlosses as the uplink pathloss to be used; or
> performing a weighted sum on at least two calculated uplink pathlosses to obtain a result, and using the result as the uplink pathloss to be used.

15. The method according to claim 14, further comprising:

receiving a first processing rule sent by the network device; or
determining a first processing rule based on a protocol agreement.

16. The method according to claim 14, further comprising:

receiving a first weighting coefficient sent by the network device; or,
determining a first weighting coefficient based on a protocol agreement, wherein the first weighting coefficient is used for performing the weighted sum on the at least two calculated uplink pathlosses.

17. The method according to any one of claims 1 to 13, wherein calculating the uplink pathloss based on the PL RS comprises:
in a case that at least two PL RSs are determined based on the first information, determining a PL RS used correspondingly for each antenna port based on a fourth correlation relationship between PL RSs and antenna ports, for calculating the uplink pathloss.

18. The method according to claim 17, further comprising:

receiving the fourth correlation relationship sent by the network device; or
determining the fourth correlation relationship based on a protocol agreement.

19. The method according to any one of claims 17 to 18, wherein in a case that a plurality of PL RSs are used correspondingly for a first antenna port of the UE, the plurality of PL RSs are used respectively to calculate uplink pathlosses, and one of following second processing rules is used to determine an uplink pathloss to be used for the first antenna port:

selecting a minimum uplink pathloss from a plurality of calculated uplink pathlosses as the uplink pathloss to be used for the first antenna port;
selecting a maximum uplink pathloss from a plurality of calculated uplink pathlosses as the uplink pathloss to be used for the first antenna port; or
performing a weighted sum on a plurality of calculated uplink pathlosses to obtain a result, and using the result as the uplink pathloss to be used for the first antenna port.

20. The method according to claim 19, further comprising:

receiving a second processing rule sent by the network device; or
determining a second processing rule based on a protocol agreement.

21. The method according to claim 19, further comprising:

receiving a second weighting coefficient sent by the network device; or
determining a second weighting coefficient based on a protocol agreement, wherein the second weighting coefficient is used for performing the weighted sum on the plurality of calculated uplink pathlosses.

22. A method for determining a pathloss, performed by a network device, comprising:
sending first information to a user equipment (UE); wherein the first information is used to determine a pathloss reference signal (PL RS) and the PL RS is used to calculate an uplink pathloss of the UE.

23. The method according to claim 22, wherein the first information comprises at least one of:

downlink control information (DCI); or
a media access control control element (MAC CE).

24. The method according to claim 23, wherein the DCI comprises a sounding reference signal (SRS) resource indicator (SRI).

25. The method according to claim 24, further comprising:
sending a first correlation relationship between SRS resource sets and PL RSs to the UE.

26. The method according to claim 23, wherein the DCI comprises transmission configuration indicator (TCI) state information.

27. The method according to claim 26, further comprising:
sending a second correlation relationship between TCI states and PL RSs to the UE.

28. The method according to claim 23, further comprising:
sending a third correlation relationship between control resource sets (CORESETs) and PL RSs to the UE.

29. The method according to claim 23, wherein a separate field in the DCI is used to determine the PL RS.

30. The method according to claim 23, wherein value information of a field in the DCI is used to determine the PL RS.

31. The method according to claim 23, wherein a separately configured MAC CE is used to determine the PL RS.

32. The method according to claim 23, wherein a reserved state of a field in the MAC CE is used to determine the PL RS.

33. The method according to any one of claims 22 to 32, further comprising:
sending a first processing rule to the UE, wherein the first processing rule is used to calculate uplink pathlosses using at least two PL RSs respectively and determine the uplink pathloss to be used from the uplink pathlosses, in a case that the UE determines the at least two PL RSs based on the first information.

34. The method according to claim 33, further comprising:
sending a first weighting coefficient to the UE, wherein the first weighting coefficient is used for performing a weighted sum on at least two uplink pathlosses.

35. The method according to any one of claims 22 to 32, further comprising:
sending a fourth correlation relationship between PL RSs and antenna ports to the UE.

36. The method according to claim 35, further comprising:
sending a second processing rule to the UE, wherein the second processing rule is used to calculate uplink pathlosses using a plurality of PL RSs respectively and determine an uplink pathloss to be used for a first antenna port from the uplink pathlosses, in a case that the plurality of PL RSs are used correspondingly for the first antenna port of the UE.

37. The method according to claim 36, further comprising:
sending a second weighting coefficient to the UE, wherein the second weighting coefficient is used for performing a weighted sum on a plurality of uplink pathlosses to obtain the uplink pathloss to be used for the first antenna port.

38. An apparatus for determining a pathloss, applied to a user equipment (UE), comprising:

a first communication module, configured to receive first information sent by a network device; and
a determination module, configured to determine a pathloss reference signal (PL RS) based on the first information and calculate an uplink pathloss based on the PL RS.

39. An apparatus for determining a pathloss, applied to a network device, comprising:
a second communication module, configured to send first information to a user equipment (UE); wherein the first information is used to determine a pathloss reference signal (PL RS) and the PL RS is used to calculate an uplink pathloss of the UE.

40. A communication system, comprising a user equipment (UE) and a network device,

wherein the UE is configured to perform a method according to any one of claims 1 to 21; and
the network device is configured to perform a method according to any one of claims 22 to 37.

41. A communication device, comprising: a transceiver, a memory, and a processor respectively connected to the transceiver and the memory, wherein the processor is configured to control the transceiver to send and receive wireless signals and implement the method according to any one of claims 1 to 37 by executing a computer executable instruction on the memory.

42. A computer storage medium, wherein a computer executable instruction is stored on the computer-readable storage medium, and when the computer executable instruction is executed, a method according to any one of claims 1 to 37 is implemented.

FIG. 1

step 201: the network device sends first information to the UE

step 202: the UE determines a PL RS based on the first information

step 203: the UE calculates an uplink pathloss based on the PL RS

FIG. 2

receiving first information sent by a network device _301_

determining a PL RS based on the first information _302_

calculating an uplink pathloss based on the PL RS _303_

FIG. 3

the network device sends first information to the UE _401_

FIG. 4

apparatus for determining a pathloss

first communication module _51_

determination module _52_

FIG. 5

apparatus for
determining pathloss

second
communication
module

~ 62

**FIG. 6**

1800

1807

processor

computer
program

1800

interface
circuit

1800

memory

transceiver

antenna

1807

computer
program

1804

**FIG. 7**

chip

processor

~1901

interface

~1902

memory

~1903

**FIG. 8**

## INTERNATIONAL SEARCH REPORT

| International application No. |
| --- |
| **PCT/CN2023/093075** |

| A. | CLASSIFICATION OF SUBJECT MATTER |
| --- | --- |

H04W 52/14(2009.01)i

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS, CNTXT, VEN, DWPI, SIPOABS, USTXT, EPTXT, WOTXT, IEEE, CNKI, 3GPP: 路径损耗, 路损, 参考信号, 传输状态指示, 控制资源集, path loss, TRP, DCI, MAC CE, SRS, TCI

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022067819 A1 (HUAWEI TECHNOLOGIES CO., LTD.) 07 April 2022 (2022-04-07) description, paragraphs [0058]-[0243], and figure 2A | 1-42 |
| X | CN 114868418 A (NTT DOCOMO INC.) 05 August 2022 (2022-08-05) description, paragraphs [0042]-[0391] | 1-42 |
| A | WO 2020166695 A1 (SHARP K.K. et al.) 20 August 2020 (2020-08-20) entire document | 1-42 |
| A | LG ELECTRONICS. "Discussion on UL Reference Signals for NR Positioning" *3GPP TSG RAN WG1 #99, R1-1912273*, 09 November 2019 (2019-11-09), entire document | 1-42 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 January 2024** | **20 January 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/093075**

| Patent document cited in search report | | | Publication date (day/month/year) | Patent family member(s) | | | Publication date (day/month/year) |
|---|---|---|---|---|---|---|---|
| WO | 2022067819 | A1 | 07 April 2022 | CN | 116325965 | A | 23 June 2023 |
| CN | 114868418 | A | 05 August 2022 | WO | 2021095104 | A1 | 20 May 2021 |
| WO | 2020166695 | A1 | 20 August 2020 | US | 2022132430 | A1 | 28 April 2022 |
| | | | | JP | 2020136759 | A | 31 August 2020 |

Form PCT/ISA/210 (patent family annex) (July 2022)